# EUROPEAN PATENT SPECIFICATION

(11) **EP 1 589 489 B1**
(45) Date of publication and mention of the grant of the patent: **19.02.2020**
(21) Application number: 04030900.7
(22) Date of filing: 28.12.2004
(51) Int. Cl.: G07C 5/00, H04L 29/06

(54) **Telematics-based vehicle data acquisition architecture**
Auf Telematik basierende Datenerfassungsarchitektur für Fahrzeuge
Architecture d'acquisition de données de véhicule basée sur la télématique

(30) Priority: 31.12.2003 US 749264
(43) Date of publication of application: 26.10.2005
(73) Proprietor: SPX Corporation, Charlotte NC 28277 (US)
(72) Inventor: Stott, David, Lancashire OL9 OLY (GB)
(74) Representative: Emde, Eric

(56) References cited:
- EP-A- 1 349 117
- WO-A-02/17184
- US-A- 5 214 582
- US-A1- 2003 167 345

## Description

### FIELD OF THE INVENTION

The invention relates generally to vehicle data acquisition equipment, and more particularly a vehicle data acquisition architecture for telematics-based vehicle applications.

### BACKGROUND

Modern vehicles increasingly employ advanced electronic systems for improved communications, safety, vehicle operation and control. Due to their complexity, appropriate methods for testing and diagnosing the systems after deployment in the vehicle are important. However, in order to diagnose one or more of the systems, appropriate vehicle data often needs to be extracted from the systems. Service bays typically carry out the diagnostics during standard warranty services and/or following a suspected system failure.

Typically, a vehicle data bus infrastructure handles the signal communication to and from the system(s). Vehicle data bus architectures, and the data conveyed on the buses, are typically vehicle-dependent, or specific to the vehicle make and/or manufacturer. With exception to the legislative requirements (e.g. OBDII), conventional methods of interfacing with the vehicle data bus to effect diagnostics servicing often require OEM-specific software and hardware.

These differences in bus standards and bus data content give rise to an ever-increasing number of vehicle variants. This increasing number of variants presents a problem to the people who create telematics applications that use vehicle data to provide meaningful content. An example of such an application is Navigation that employs road-speed data to perform dead reckoning.

Conventionally, application programmers often need an intimate understanding of each vehicle's data-bus architecture and associated knowledge in how to extract desired vehicle data from that architecture. This approach typically requires a substantial investment in time and cost for the programmer. In addition, the application generally requires customization from one vehicle make and/or model, to the next. This presents a problem in terms of application portability to all potential telematics platforms.

While the burdens and costs on the application programmer due to the conventional architecture described above present significant problems, the vehicle manufacturer also encounters undesirable issues. For example, in order to support the applications programmers conventionally, the vehicle manufacturer often must release sensitive intellectual property concerning the vehicle data-bus architecture. Moreover, the reliability of the vehicle electronics may be compromised through data access not controlled to the highest possible standards.

What is needed and as yet unavailable is a telematics-based vehicle data acquisition architecture that enables telematics application programmers to develop applications that can extract vehicle data with generic data requests independent of the vehicle data bus architecture. The telematics-based vehicle data acquisition system described herein satisfies this need.

Further, reference is made to WO 2002 0 17184 A1 disclosing a system, method and computer program product for remote vehicle diagnostics, monitoring, configuring and reprogramming.

Moreover, attention is drawn to EP 1 349 117 A2 disclosing a vehicle mode manager managing vehicle state information. The vehicle mode manager includes a code module that registers an application program with the vehicle mode manager, a code module that receives vehicle status information, and a code module that determines a vehicle state based on both the vehicle status information and a current vehicle state. In addition, a privileged application or another manager can also set the vehicle state. The vehicle mode manager also includes a code module that provides the vehicle state to an application program.

Finally, US 2003 0 167 345 A1 shows a communications bridge between a communications network carried by a motor vehicle and configured for communications according to a first protocol and a remote system configured for communications according to a second protocol, including a first interface, a second interface and a digital signal processor.

In accordance with the present invention, a method of acquiring vehicle parameter data from a vehicle data bus and a vehicle data acquisition system as set forth in the independent claims are provided. Further embodiments of the invention are inter alia disclosed in the dependent claims.

The telematics-based vehicle diagnostics system described herein provides a unique way to allow telematics application programmers to program their applications without the burden of knowing the precise data bus architecture for each vehicle make and model. This provides for better application portability, debug capabilities, and reduced overall development costs.

To realize the foregoing advantages, the diagnostics system in one form comprises a method of acquiring vehicle data from a vehicle data bus as defined in claim 1. The method is responsive to the execution of a telematics application on a local telematics unit. The method comprises first accessing a local vehicle library, in response to vehicle data requests from the application. The local vehicle library then carries out steps comprising: retrieving vehicle data bus information from a remote database; using the vehicle data bus information to extract vehicle data from the vehicle data bus, the vehicle data corresponding to the requests for vehicle parameter data; interpreting the retrieved vehicle data; and providing the interpreted data to the telematics application to satisfy the request for vehicle data.

In another form, a vehicle data acquisition system is described in claim 6 for extracting vehicle data from a vehicle data bus for telematics applications. The vehicle data acquisition system comprises a remote telematics unit having a server, and a vehicle database running on the server. The vehicle database includes vehicle-specific data bus architecture information. The system further includes a local telematics unit comprising a controller, an application program running on the controller and comprising at least one vehicle data request, and at least one library. The library is interposed between the application program and the vehicle data bus. Each library comprises a data retriever, a data interpreter, and a wireless link responsive to the data retriever for establishing a network connection to the remote server, the link providing a data download path for transferring the data bus architecture information to the local telematics unit.

Other features and advantages will be apparent from the following detailed description when read in conjunction with the accompanying drawings.

### BRIEF DESCRIPTION OF THE DRAWINGS

The vehicle diagnostics system and method will be better understood by reference to the following more detailed description and accompanying drawings in which
FIG. 1 is a block diagram of a telematics-based vehicle diagnostics architecture; and
FIG. 2 is a flowchart illustrating a method of acquiring data with the architecture of Figure 1.

### DETAILED DESCRIPTION

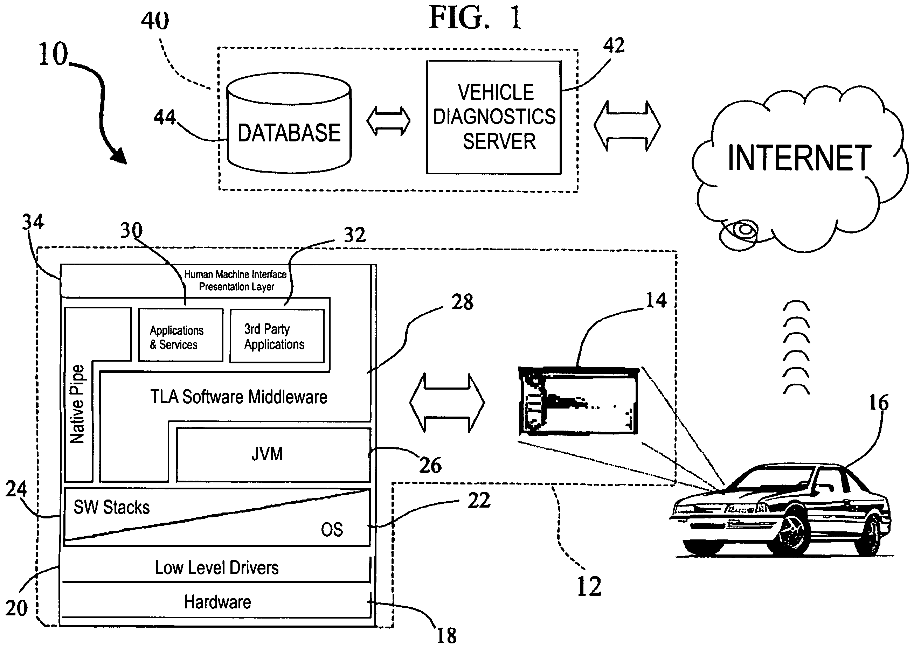

The telematics-based vehicle data acquisition architecture described herein, generally designated 10 (Figure 1), provides a unique way of simplifying the vehicle interface for telematics applications programmers. This is accomplished by interposing vehicle libraries 28 between the telematics application and the proprietary vehicle data bus (not shown). The vehicle libraries respond to generic requests from the application to access data from any vehicle data bus. As a result, the application programmer need not know the precise details of the vehicle data bus in order to develop the application.

Referring now to Figure 1, the vehicle diagnostics architecture 10 includes a local data acquisition unit 12 having a telematics control unit (TCU) 14 installed in a vehicle 16. TCU's are well known, with one particular example known under the trademark "ONSTAR". Typically, the unit comprises a computer having hardware 18 that connects to the vehicle internal data network (not shown), often referred to as a control area network, or CAN. One standard for a suitable network is known under the J1850 specification, although other standards may be employed as well. Applications such as navigation, security, and vehicle diagnostics are possible through the TCU's interface to the vehicle data bus infrastructure.

Further referring to Figure 1, the local data acquisition unit 12 includes a collection of software modules to control and direct the hardware 18 to provide benefits for telematics applications programmers. Included in this collection are low-level drivers 20 in the form of software modules, a real time operating system 22 and software stacks 24. The operating system and software stacks provide a main control function over the TCU 14 and maintain tight cohesion between the TCU software and hardware 18.

Sitting on the real time operating system 22 is a Java virtual machine (JVM) 26 that provides an interpretation engine for Java-based telematics application programs. The JVM interfaces with a set of runtime libraries 28 in the form of an application programmers interface (API) that provides the software functionality to generate an abstract interface between the hardware and software applications. The libraries are constructed using Java technology and include the functionality to interface with the high-level applications program, retrieve data bus information, establish a wireless link, extract data from the vehicle data bus, and interpret the data as more fully described below.

User-generated Java-based algorithms, diagnostic sequences and the like sit on the libraries in the form of third-party applications 30 and services 32. These modules control how the libraries are used as information building blocks. As an optional feature, a human machine interface 34 such as a graphical user interface (GUI) is provided.

The telematics unit 14 preferably employs an open-standard services delivery platform, such as that specified by the Open Services Gateway Initiative (OSGi). The platform provides a flexible delivery mechanism over wide area networks to local networks and devices.

To take advantage of the telematics services delivery platform, the vehicle data acquisition architecture further includes a vehicle data center 40 based remotely from the local vehicle data acquisition unit 12. The center comprises a vehicle data server 42 operating in cooperation with a vehicle database 44. The database provides a repository for vehicle-specific data bus information. The information is gathered from vehicle manufacturers and includes proprietary data bus configurations for each vehicle make and model potentially served by the telematics application.

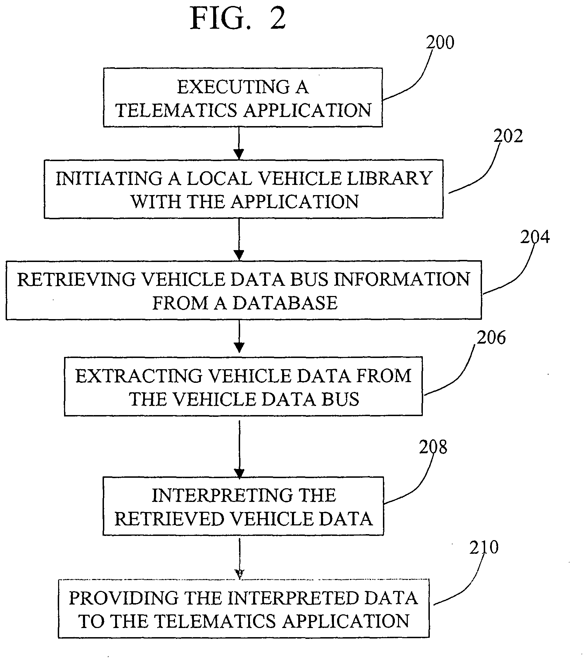

In practice, a telematics applications programmer can take advantage of the vehicle libraries 28 to simplify the application at a high level such that data requests may be made generically, or independent of the vehicle make or model. As an example, and referring to Figure 2, if vehicle speed data is required during the execution of a telematics application, at step 200, the following lines would suffice to secure the data for the application:
IF
   GetVchicleData(EngineSpeed) > 5 mph
THEN
   CheckValue(DoorsLocked)

Further referring to Figure 2, with the application running, the program string regarding engine speed initiates action, at step 202, on the part of the runtime library to furnish the vehicle speed data to the application. The vehicle runtime library 28 then responds to the application request, at step 204, by retrieving the proprietary vehicle data bus information from the remote runtime database 44. The information includes, for example, the data protocol type, the access method for the parameter, value addresses, shift and mask information, return value decoding methods, scaling and unit conversion, etc.

The retrieval, at step 204, is accomplished by establishing a wireless link through the open-standard services delivery platform, to the remote server 42. The server then queries the database 44 for the appropriate vehicle data bus information, and downloads it to the TCU runtime library 28 via the wireless link.

Once the proprietary vehicle data bus information is retrieved, the specific data (in this example, vehicle speed) is extracted from the databus, at step 206, in the form of raw bytes. The extraction includes passing the data bus information to a protocol driver (not shown), and retrieving the specific raw data from the protocol driver. The library 28 then utilizes the value decoding, scaling and unit conversion information to interpret the data, at step 208, and provide it in a meaningful format for use by the application, at step 210. The application then utilizes the information to provide its intended content. The information retrieval potentially occurs many times throughout the application execution, providing vehicle data bus access to the application via the runtime library.

Those skilled in the art will recognize the many benefits and advantages afforded by the present invention. Of significant importance is the use of an intermediate abstract software layer to extract vehicle data requested by a telematics application. By employing the library, the burden of knowing the specific vehicle bus architecture is removed from the application programmer and undertaken by the library and the remote server. As a result, telematics applications that utilize vehicle data can be developed at higher levels, significantly improving the portability of the application between platforms.

Although the vehicle data acquisition architecture described herein identifies a specific diagnostics telematics use, it should be understood that any telematics application using vehicle data (such as navigation, security, etc.) may benefit from the architecture described herein.

## Claims

1. A method of acquiring vehicle data from a vehicle data bus, the method comprising:
providing a vehicle diagnostics architecture (10) including a local data acquisition unit (12) having a local telematics control unit (14) installed in a vehicle (16);
executing (200) a telematics application on the local telematics control unit (14), the telematics application being implemented as a software program;
generically requesting, via the telematics application, vehicle data independent of the vehicle data bus architecture (10);
initiating (202) a local vehicle runtime library (28), in response to the generic request for vehicle data, the local vehicle runtime library (28) carrying out the steps comprising:
retrieving (204) the proprietary vehicle data bus information from a remote runtime database (44);
extracting (206) vehicle data from the vehicle data bus using the vehicle data bus information retrieved from the remote runtime database (44), the vehicle data corresponding to the generic request for vehicle data;
interpreting (208) the retrieved vehicle data; and
providing (210) the interpreted data to the telematics application to satisfy the generic request for vehicle data.

2. A method according to claim 1 wherein the step of retrieving (204) comprises:
establishing a wireless link to a remote server (42);
accessing a vehicle database (24) with the remote server (42); and
downloading vehicle data bus information to the local vehicle runtime library (28) from the remote runtime database (44).

3. A method according to claim 2 wherein the step of using (206) further comprises passing the vehicle data bus information to a protocol driver.

4. A method according to claim 1 wherein:
the telematics application comprises a vehicle diagnostics application program.

5. A computer-readable medium having stored thereon sequences of instructions which, when executed, cause a local telematics control unit (14) to carry out the method of anyone of the preceding claims.

6. A vehicle data acquisition system configured to extract vehicle data from a vehicle data bus for telematics applications, the vehicle data acquisition system comprising:
a remote telematics unit (40) comprising:
a remote server (42); and
a vehicle database (44) running on the remote server (42), the vehicle database (44) comprising vehicle-specific (16) data bus architecture information,
a vehicle diagnostics architecture (10) including a local data acquisition unit (12) having a local telematics control unit (14) installed in the vehicle (16), the local telematics control unit (14) comprising:
a controller,
a telematics application being implemented as a software program and running on the controller and comprising at least one generic vehicle data request,
at least one runtime library (28) interposed between the telematics application and a proprietary vehicle data bus, each runtime library (28) comprising:
a data retriever,
a data interpreter, and
a wireless link responsive to the data retriever for establishing a network connection to the remote server (42), the link providing a vehicle data download path for transferring the data bus architecture information to the local telematics control unit (14); and
wherein the at least one runtime library (28), in response to the generic vehicle data request, is configured to
retrieve (204) the proprietary vehicle data bus information from the vehicle database (44);
extract (206) vehicle data from the vehicle data bus using the vehicle data bus information retrieved from the vehicle database (44), the vehicle data corresponding to the generic vehicle data request;
interpret (208) the retrieved vehicle data; and
provide (210) the interpreted data to the telematics application to satisfy the generic vehicle data request.

7. A vehicle data acquisition system according to claim 6 wherein:
the data retriever is operative, in response to the data bus information, to retrieve vehicle data responsive to the at least one generic vehicle data request and pass the retrieved data to the data interpreter, the data interpreter operative to translate the retrieved data into a format useable by the telematics application.

8. A vehicle data acquisition system according to claim 6 wherein the telematics application comprises:
a vehicle diagnostics application.

## Patentansprüche

1. Ein Verfahren zum Erfassen von Fahrzeugdaten von einem Fahrzeugdatenbus, wobei das Verfahren Folgendes aufweist:
Bereitstellen einer Fahrzeugdiagnosearchitektur (10) mit einer lokalen Datenerfassungseinheit (12) mit einer lokalen Telematiksteuereinheit (14), die in einem Fahrzeug (16) installiert ist;
Ausführen (200) einer Telematikanwendung auf der lokalen Telematiksteuereinheit (14), wobei die Telematikanwendung als Softwareprogramm implementiert ist;
generisches Anfordern von Fahrzeugdaten mittels der Telematikanwendung unabhängig von der Fahrzeugdatenbusarchitektur (10);
Initiieren (202) einer lokalen Fahrzeug-Laufzeitbibliothek (28) als Reaktion auf die generische Anforderung von Fahrzeugdaten, wobei die lokale Fahrzeug-Laufzeitbibliothek (28) die Schritte ausführt, die Folgendes aufweisen:
Abrufen (204) der proprietären Fahrzeugdatenbusinformation bzw. -informationen aus einer fernen Laufzeitdatenbank (44);
Extrahieren (206) von Fahrzeugdaten aus dem Fahrzeugdatenbus unter Verwendung der aus der fernen Laufzeitdatenbank (44) abgerufenen Fahrzeugdatenbusinformation bzw. -informationen, wobei die Fahrzeugdaten der generischen Anforderung von Fahrzeugdaten entsprechen;
Interpretieren (208) der abgerufenen Fahrzeugdaten; und
Bereitstellen (210) der interpretierten Daten an die Telematikanwendung, um der generischen Anforderung von Fahrzeugdaten nachzukommen.

2. Ein Verfahren nach Anspruch 1, wobei der Schritt des Abrufens (204) Folgendes aufweist:
Herstellen einer drahtlosen Verbindung zu einem fernen Server (42);
Zugreifen auf eine Fahrzeugdatenbank (24) mit dem fernen Server (42); und
Herunterladen von Fahrzeugdatenbusinformation bzw. -informationen in die lokale Fahrzeug-Laufzeitbibliothek (28) von der fernen Laufzeitdatenbank (44).

3. Ein Verfahren nach Anspruch 2, wobei der Schritt der Verwendung (206) ferner das Weiterleiten der Fahrzeugdatenbusinformation bzw. - informationen an einen Protokolltreiber aufweist.

4. Ein Verfahren nach Anspruch 1, wobei:
die Telematikanwendung ein Fahrzeugdiagnose-Anwendungsprogramm aufweist.

5. Ein computerlesbares Medium mit darauf gespeicherten Befehlsfolgen, die, wenn sie ausgeführt werden, eine lokale Telematiksteuereinheit (14) veranlassen, das Verfahren eines der vorhergehenden Ansprüche auszuführen.

6. Ein Fahrzeugdatenerfassungssystem, das eingerichtet ist, Fahrzeugdaten aus einem Fahrzeugdatenbus für Telematikanwendungen zu extrahieren, wobei das Fahrzeugdatenerfassungssystem Folgendes aufweist:
eine ferne Telematikeinheit (40), die Folgendes aufweist:
einen fernen Server (42); und
eine Fahrzeugdatenbank (44), die auf dem fernen Server (42) läuft, wobei die Fahrzeugdatenbank (44) fahrzeugspezifische (16) Datenbusarchitekturinformation bzw. -informationen aufweist,
eine Fahrzeugdiagnosearchitektur (10), die eine lokale Datenerfassungseinheit (12) mit einer im Fahrzeug (16) installierten lokalen Telematiksteuereinheit (14) beinhaltet, wobei die lokale Telematiksteuereinheit (14) Folgendes aufweist:
eine Steuerung,
eine Telematikanwendung, die als Softwareprogramm implementiert ist und die auf der Steuerung läuft und die mindestens eine generische Fahrzeugdatenanforderung aufweist,
mindestens eine Laufzeitbibliothek (28), die zwischen der Telematikanwendung und einem proprietären Fahrzeugdatenbus angeordnet ist, wobei jede Laufzeitbibliothek (28) Folgendes aufweist:
einen Datenabrufer,
einen Dateninterpretierer, und
eine drahtlose Verbindung, die auf den Datenabrufer reagiert, um eine Netzwerkverbindung zum fernen Server (42) herzustellen, wobei die Verbindung einen Fahrzeugdaten-Downloadpfad zum Übertragen der Datenbusarchitekturinformation bzw. -informationen an die lokale Telematiksteuereinheit (14) bereitstellt; und
wobei die mindestens eine Laufzeitbibliothek (28) als Reaktion auf die generische Fahrzeugdatenanforderung eingerichtet ist zum:
Abrufen (204) der proprietären Fahrzeugdatenbusinformation bzw. - informationen von der Fahrzeugdatenbank (44);
Extrahieren (206) von Fahrzeugdaten aus dem Fahrzeugdatenbus unter Verwendung der aus der Fahrzeugdatenbank (44) abgerufenen Fahrzeugdatenbusinformation bzw. -informationen, wobei die Fahrzeugdaten der generischen Fahrzeugdatenanforderung entsprechen; Interpretieren (208) der abgerufenen Fahrzeugdaten; und
Bereitstellen (210) der interpretierten Daten an die Telematikanwendung, um die generische Fahrzeugdatenanforderung zu erfüllen.

7. Ein Fahrzeugdatenerfassungssystem nach Anspruch 6, wobei:
der Datenabrufer als Reaktion auf die Datenbusinformation bzw. - informationen betreibbar ist, Fahrzeugdaten als Reaktion auf die mindestens eine generische Fahrzeugdatenanforderung abzurufen und die abgerufenen Daten an den Dateninterpretierer weiterzugeben, wobei der Dateninterpretierer betreibbar ist, die abgerufenen Daten in ein für die Telematikanwendung verwendbares Format zu übersetzen.

8. Ein Fahrzeugdatenerfassungssystem nach Anspruch 6, wobei die Telematikanwendung Folgendes aufweist:
eine Fahrzeugdiagnose-Anwendung.

## Revendications

1. Procédé d'acquisition de données de véhicule à partir d'un bus de données de véhicule, le procédé comprenant les étapes suivantes :
la fourniture d'une architecture de diagnostic de véhicule (10) comportant une unité d'acquisition de données locale (12) ayant une unité de commande de télématique locale (14) placée dans un véhicule (16) ;
l'exécution (200) d'une application télématique sur l'unité de commande de télématique locale (14), l'application télématique étant mise en œuvre sous forme d'un programme logiciel ;
la requête générique, via l'application télématique, de données de véhicule indépendantes de l'architecture de diagnostic de véhicule (10) ;
le déclenchement (202) d'une bibliothèque d'exécution de véhicule locale (28), en réponse à la requête générique de données de véhicule, la bibliothèque d'exécution de véhicule locale (28) mettant en œuvre les étapes comprenant les étapes suivantes :
la récupération (204) des informations de bus de données de véhicule propriétaire à partir d'une base de données d'exécution distante (44) ;
l'extraction (206) de données de véhicule à partir du bus de données de véhicule en utilisant les informations de bus de données de véhicule récupérées à partir du bus de données d'exécution distante (44), les données de véhicule correspondant à la requête générique de données de véhicule ;
l'interprétation (208) des données de véhicule récupérées ; et
la fourniture (210) des données interprétées à l'application télématique pour satisfaire la requête générique de données de véhicule.

2. Procédé selon la revendication 1, dans lequel l'étape de récupération (204) comprend les étapes suivantes :
l'établissement d'une liaison sans fil avec un serveur distant (42) ;
l'accès à une base de données de véhicule (24) avec le serveur distant (42) ; et
le téléchargement d'informations de bus de données de véhicule vers la bibliothèque d'exécution de véhicule locale (28) à partir de la base d'exécution de données distante (44).

3. Procédé selon la revendication 2, dans lequel l'étape d'utilisation (206) comprend en outre la transmission des informations de bus de données de véhicule à un pilote de protocole.

4. Procédé selon la revendication 1, dans lequel :
l'application télématique comprend un programme d'application de diagnostic de véhicule.

5. Support lisible par ordinateur ayant des séquences d'instructions stockées en lui qui, quand elles sont exécutées, forcent une unité de commande de télématique locale (14) à mettre en oeuvre le procédé selon l'une quelconque des revendications précédentes.

6. Système d'acquisition de données de véhicule configuré pour extraire des données de véhicule à partir d'un bus de données de véhicule pour des applications télématiques, le système d'acquisition de données de véhicule comprenant :
une unité télématique à distance (40) comprenant :
un serveur distant (42) ; et
une base de données de véhicule (44) fonctionnant sur le serveur distant (42), la base de données de véhicule (44) comprenant des informations d'architecture de bus de données (16) spécifiques au véhicule,
une architecture de diagnostic de véhicule (10) comportant une unité d'acquisition de données locale (12) ayant une unité de commande de télématique locale (14) placée dans le véhicule (16), l'unité de commande de télématique locale (14) comprenant :
un contrôleur,
une application télématique qui est exécutée sous forme d'un programme logiciel et fonctionnant sur le contrôleur et comprenant au moins une requête de données de véhicule générique,
au moins une bibliothèque d'exécution (28) interposée entre l'application télématique et un bus de données de véhicule propriétaire, chaque bibliothèque d'exécution (28) comprenant :
un récupérateur de données,
un interprète de données, et
une liaison sans fil qui répond au récupérateur de données pour établir une connexion réseau avec le serveur distant (42), la liaison fournissant une voie de téléchargement des données de véhicule pour transférer les informations d'architecture du bus de données à l'unité de commande de télématique locale (14) ; et
dans lequel ladite au moins une bibliothèque d'exécution (28), en réponse à la requête générique de données de véhicule, est configurée pour
récupérer (204) les informations de bus de données de véhicule propriétaire à partir de la base de données de véhicule (44) ;
extraire (206) des données de véhicule à partir du bus de données de véhicule utilisant les informations de bus de données de véhicule récupérées à partir de la base de données de véhicule (44), les données de véhicule correspondant à la requête de données de véhicule générique ;
interpréter (208) les données de véhicule récupérées ; et
fournir (210) les données interprétées à l'application télématique pour satisfaire la requête générique de données de véhicule.

7. Système d'acquisition de données de véhicule selon la revendication 6, dans lequel :
le récupérateur de données est opérationnel, en réponse aux informations de bus de données, pour récupérer des données de véhicule en réponse à ladite au moins une requête générique de données de véhicule et pour transmettre les données récupérées à l'interpréteur de données, l'interpréteur de données étant opérationnel pour traduire les données récupérées dans un format utilisable par l'application télématique.

8. Système d'acquisition de données de véhicule selon la revendication 6, dans lequel l'application télématique comprend :
une application de diagnostic de véhicule.
